# EUROPEAN PATENT SPECIFICATION

(11) **EP 0 665 279 B1**
(45) Date of publication and mention of the grant of the patent: **29.08.2001**
(21) Application number: 94101493.8
(22) Date of filing: 01.02.1994
(51) Int. Cl.: C09K 19/54, G02F 1/1333, C09K 19/02

(54) **Polymer dispersed ferroelectric smectic liquid crystal**
Polymer-dispergiertes, ferroelektrisches, smectisches Flüssigkristall
Cristal liquide ferroélectrique smectique dispersé dans un polymère

(43) Date of publication of application: 02.08.1995
(73) Proprietor: KENT STATE UNIVERSITY, Kent, OH 44242 (US)
(72) Inventor: Kumar, Satyendra, Kent, Ohio 44240 (US)
(74) Representative: Wise, Stephen James

(56) References cited:
- EP-A- 0 352 637
- EP-A- 0 506 176
- WO-A-87/01822
- WO-A-93/23496
- DATABASE WPI Derwent Publications Ltd., London, GB; AN 93-134652 & WO-A-93 07527 (NEW TECHNOLOGY SYSTEM)
- APPLIED PHYSICS LETTERS vol. 60, no. 25 , 22 June 1992 , NEW YORK US pages 3093 - 3095 H.S.KITZEROW 'linear electro-optic effects in polymer-dispersed ferroelectric liquid crystals'
- POLYMERS FOR ADVANCED TECHNOLOGY vol. 3, no. 5 , August 1992 , CHICHESTER (SUSSEX, GB) pages 231 - 235 H.S.KITZEROW 'Helical unwinding in polymer-dispersed ferroelectric liquid crystals'
- PATENT ABSTRACTS OF JAPAN vol. 13, no. 403 (P-929)(3751) 7 September 1989 & JP-A-01 145 636 (SEIKO EPSON CORP) 7 June 1989
- PATENT ABSTRACTS OF JAPAN vol. 13, no. 403 (P-929)(3751) 7 September 1989 & JP-A-01 145 635 (SEIKO EPSON) 7 June 1989

## Description

The present invention relates generally to liquid crystal technology, and more specifically to the manufacture of novel ferroelectric smectic liquid crystal dispersed in a polymer matrix providing an electro-optic effect offering multistable optical states, fast switching times down to a few microseconds or less, high contrast and brightness, and wide viewing angles.

### Background of the Invention

Smectic liquid crystals are characterized by molecules which align in layers. Molecular ordering exists within each layer, with the degree of molecular ordering depending on the particular smectic phase. In chiral smectic materials, which include the chiral smectic C*, F*, I*, G* and H* phases, the ordering of the molecules within the layers rotates by a constant angle from layer to layer, so that the liquid crystal structure is twisted. For example, smectic C* phases are characterized in that the molecules align in layers in which the directors (*i*.*e*., the common directions of the long axes of the molecules within each layer) are oblique to the layer boundaries, so that the "tilt angle" of the molecules (*i*.*e*., the angle between the director and the layer normal) is the same from layer to layer. In bulk samples of smectic C* material, the directors twist from layer to layer.

Molecules of substances having chiral smectic liquid crystal phases have permanent dipole moments approximately normal to the director. The alignment of molecules of chiral smectic liquid crystal in an external electric field is determined in part by competition between the torques induced by this permanent dipole moment and by the induced dipole moment which, in materials with positive dielectric anisotropy, is parallel to the director. The smectic C*, F*, I*, G* and H* phases are all "ferroelectric" in the sense that geometry of the liquid crystal may be altered with the application of an electromagnetic field and' then, under proper conditions, remains stable once the field is removed.

A number of transmissive mode displays using smectic C* phase liquid crystal have been proposed. For example, "surface-stabilized ferroelectric liquid crystal" ["SSFLC"] displays make use of thin films of smectic C* liquid crystal confined between parallel substrates. In SSFLC displays, the liquid crystal is preferably aligned in a so-called "bookshelf" geometry in which the molecules are arranged in layers that are perpendicular to the inner surfaces of the substrates and the molecules are approximately parallel along a 45° angle to the layers. The material may be switched between two stable orientations by generating external electric fields across the liquid crystal normal to the inner surfaces of the substrates. The field useful for switching the material from one orientation to another is opposite in polarity to the field useful for switching back to the first of the orientations. If the film is sufficiently thin, each orientation should be stable when the electric field is removed. The two stable orientations differ in that the directors in the two orientations form mirror images about a plane normal to the layers and to the inner surfaces of the substrates.

In one proposed SSFLC device, the liquid crystal is confined between parallel substrates which are placed between a polarizer and an analyzer. The device modulates light by controlling the polarization direction of linearly polarized light transmitted through the liquid crystal. Due to the birefringence of the liquid crystal, light incident on the liquid crystal is decomposed into two orthogonally-polarized components having different speeds. The relative advance of one of the polarized components relative to the other rotates the polarization direction of the transmitted light relative to that of the incident light to a degree dependent on the thickness of the liquid crystal film and the orientation of the director within the film.

In a preferred device, the substrates contain a film of liquid crystal having a film thickness selected to effect a 90° rotation of the polarization direction of the light incident on the liquid crystal. If the polarizer is aligned at approximately 45° with respect to the optic axis of the liquid crystal in the first of the two orientations and the analyzer is oriented parallel or perpendicular to the polarizer, the light transmission through the device is maximized or minimized in the first stable orientation of the liquid crystal. Applying an electric field to transform the liquid crystal to the second stable orientation changes the intensity of light transmitted by the device. Consequently, such an SSFLC display is bright when the liquid crystal is in one of the stable orientations and dark when the liquid crystal is in the other orientation. The optical behavior of the device may be changed by rotating the analyzer relative to the polarizer, or either the polarizer or analyzer relative to the liquid crystal.

Among the advantages attributed to displays using smectic C* liquid crystal are fast switching times, high contrast and wide viewing angles compared to commercially available liquid crystal displays such as twisted nematic displays. One application for these ferroelectric liquid crystal materials would be in computer display terminals and televisions. Most currently available flat panel displays are based on twisted nematic liquid crystal. These flat panel displays require less power than conventional cathode ray tubes, but have not replaced cathode ray tubes due to their slow response, poor contrast, low brightness and narrow viewing angle.

Displays using ferroelectric smectic C* liquid crystal may be capable of switching times on the order of microseconds or less, whereas the switching times of twisted nematic displays are often on the order of milliseconds. Existing SSFLC displays have shown viewing angles in excess of 45° and contrast ratios on the order of 1500:1, which exceed the performance of typical twist cells. Despite these advantages, SSFLC displays have not replaced cathode ray tubes due to the technical difficulty and expense of obtaining stable bookshelf alignment of the liquid crystal. Furthermore, the use of surface coatings with strong anchoring which promote alignment of the liquid crystal parallel to the substrates increases the switching voltage required to switch between stable orientations. Another disadvantage inherent in SSFLC displays is that the substrate anchoring that is necessary for bookshelf alignment is unstable; the liquid crystal may switch to light scattering "zig-zag" or "chevron" texture if jarred, rendering the display worthless. Despite intense research over the past decade, there remains a need for an economical method for aligning ferroelectric smectic liquid crystal in a geometry useful for display applications.

Flat panel liquid crystal displays using a nematic liquid crystal phase have been formed by phase separation of the liquid crystal phase from solution with a polymer or pre-polymeric resin. The earliest form of these materials comprised microdroplets of liquid crystal dispersed in a continuous polymeric matrix. In such materials, the ordinary index of refraction was matched to an index of refraction of the polymer. The material scattered light in the absence of an external field and transmitted light in the presence of an electric field. The evolution of such materials may be found in references such as U.S. Patents No. 4,671,618; 4,673,255; 4,685,771; 4,688,900; 4,890,902; 5,004,323 and 5,093,735, the disclosures of which are incorporated by reference.

Three techniques have been proposed for inducing phase separation of the nematic liquid crystal phase from the polymer phase. According to a method known as "polymerization induced phase separation" or "PIPS," the liquid crystal is dissolved in a prepolymer followed by polymerization. According to another method known as "thermal induced phase separation" or "TIPS," the liquid crystal is dissolved (or redissolved) in a polymer melt followed by cooling. According to the third method, known as "solvent induced phase separation" or "SIPS.," the liquid crystal and polymer are dissolved in a common solvent followed by evolution of the solvent. The polymer is often cross-linked to improve the properties of the display material. The size and density of the droplets may be varied by changing the ratios of the liquid crystal and polymer phases as well as by changing the conditions under which phase separation occurs.

While flat panel displays comprising material formed by phase separation of a nematic liquid crystal phase from solution with a polymer appear to be highly durable, as well as useful and economical for many applications, the fastest switching times for such materials remain on the order of a millisecond. Furthermore, the viewing angles for these materials can be increased beyond about 20° only through the use of specialized birefringent polymers which increase the cost of the displays. There remains a need for relatively inexpensive flat panel displays with higher switching speeds, higher contrast and larger viewing angles.

### Disclosure of the invention

The present invention in its first aspect provides a light modulating material defining a viewing surface, comprising microdomains of a liquid crystal dispersed in a light transmissive polymer medium, characterised in that the liquid crystal is ferroelectric and smectic, and wherein an index of refraction of the polymer medium is approximately equal to an effective index of refraction along an angle complementary to the tilt angle of the liquid crystal.

The present invention in its second aspect provides a light modulating device including a light modulating material comprising microdomains of a liquid crystal dispersed in a light transmissive polymer medium, said material being positioned between two polarizers and between electrodes constructed and arranged to impose electric fields across the material in a direction parallel to its thinnest dimension, characterised in that the light modulating device is a bistable light modulating device, the liquid crystal is ferroelectric and smectic, an index of refraction of the polymer medium is approximately equal to an effective index of refraction along an angle complementary to the tilt angle of the liquid crystal, and the means are electrodes and two polarizers, said material being positioned between the two polarizers and between the electrodes.

The present invention in its third aspect provides a light modulating material defining a viewing surface, comprising microdomains of a liquid crystal dispersed in a light transmissive polymer medium, characterised in that the liquid crystal is ferroelectric and smectic, and wherein the microdomains have a characteristic length no greater than ten times the pitch length of the ferroelectric smectic liquid crystal, and the ferroelectric liquid crystal molecules throughout each of said domains are aligned generally parallel to each other in smectic planes which are themselves parallel to each other.

The present invention in its fourth aspect provides a method for forming a light modulating material characterised by the steps of:
a) forming a solution having a mesogenic component capable of forming a ferroelectric smectic liquid crystal and a medium-forming component capable of forming a light transmissive polymer medium;
b) inducing a force in the solution to promote alignment of molecules of the mesogenic component along a direction relative to a surface of the solution; and
c) solidifying the medium forming component while the solution is biased to promote phase separation of microdomains of the ferroelectric smectic liquid crystal from the polymeric medium wherein the microdomains are sized to the order of magnitude of the pitch length of the ferroelectric material or less.

Preferably, the step of inducing a force includes imposing an electromagnetic field having a electric field component perpendicular to the surface of the solution. Preferably, the step of inducing a force includes imposing an electromagnetic field having a magnetic field component parallel to the surface of the solution. Preferably, the step of inducing a force includes imposing an electromagnetic field having a magnetic field component parallel to the surface of the solution and a DC electric field component perpendicular to the surface; and
wherein the method includes the additional steps of positioning optical polarizers adjacent the material and adjusting the polarization directions of the polarizers to maximize or minimize light transmission.

The present invention in its fifth aspect provides a method for forming a light modulating material characterised by the steps of:
a) forming a solution having a mesogenic component capable of forming a dispersed ferroelectric smectic liquid crystal and a medium-forming component capable of forming a light transmissive polymer medium;
b) solidifying the medium forming component to promote phase separation of droplets of the ferroelectric smectic liquid crystal from the polymeric medium, wherein an index of refraction of the polymeric medium is approximately equal to the effective index of refraction along an angle complementary to the tilt angle of the liquid crystal; and
c) shearing the material to promote elongation of the droplets of the ferroelectric smectic liquid crystal.

Preferably, the step of inducing a force in the solution is performed by imposing an electromagnetic field in the solution while the medium-forming component is being solidified.

This invention provides a new class of liquid crystal light modulating materials comprising a ferroelectric liquid crystal phase interspersed with a light transmissive polymer phase. The new materials of the invention are characterized in part by simplicity of preparation and display fabrication, switching times on the order of microseconds, multistable switching, high contrast and wide viewing angles.

Either thermosetting or thermoplastic polymers may be used, including polystyrenes, polymers of α-methylstyrene, vinyl-toluene, isobutylene, butadiene, methylbutene, or epoxies cured with various curing agents such as thiols, alcohols and mercaptans. Birefringent polymers may be used, depending on the application.

Likewise, preferred liquid crystals include those having ferroelectric smectic phases near room temperature or another working temperature range for the material, and which are compatible with the polymer. Among these are ZLI-3654, ZLI-4003, ZLI-4005, ZLI-4140, and ZLI-4237-100 available from E. Merck of Darmstadt, Germany; SEC-13 and 842, available from BDH; a mixture of W7 and W3, each available from Displaytech; Alpha Chloro Ester (S5, R-6) available from Aldrich Chemical; and a material with the structural formula C₂H₅ - CCH₃H - CClH - COO - Ph - Ph - OR and its mixtures. Liquid crystal having positive or negative dielectric anisotropy may be used, depending on the application.

Particularly useful materials feature spherical or spheroidal microdroplets of liquid crystal having diameters of the order of magnitude of the pitch length of the liquid crystal or less. Such droplets form spontaneously if phase separation is performed under appropriate conditions. For example, a cross-linking agent may be added to the solution of liquid crystal and polymer, and cross-linking of the polymer phase initiated at an appropriate time to limit the growth of the liquid crystal droplets. Droplet size may also be controlled by heating a phase separated light modulating material in order to redissolve the liquid crystal and polymer, and then cooling the solution at a controlled rate in order to reinduce phase separation. These and other techniques for controlling the size and shape of liquid crystal microdroplets formed during phase separation are discussed in U.S. Patent No.4,673,255, the disclosure of which is incorporated by reference.

When phase separation of a ferroelectric smectic material occurs in the presence of a force promoting the alignment of the liquid crystal in the microdomains, such as an external electromagnetic field, applied shear, temperature gradient or a combination thereof, the liquid crystal assumes a geometry featuring parallel layers analogous to bookshelf geometry in thin films of the liquid crystal. (For convenience, the parallel layer geometry without twist in microdomains will also be referred to as "bookshelf" geometry.") If the anchoring between the liquid crystal and polymer is sufficiently weak, the microdomains may be switched bistably or multistably, depending on the smectic phase, Several switching modes, including normally scattering, normally transmitting and bistable modes, are possible depending on the composition of the material and the direction of the alignment promoted by the force applied to the material during, or after, phase separation.

Preferably, the materials modulate light by means of one of two mechanisms. In, "scattering-transmissive" devices, the effective index of refraction of the liquid crystal is matched to an index of refraction of the polymer in one alignment of the liquid crystal, and mismatched with that refractive index of the polymer in another alignment of the liquid crystal. When the alignment of the liquid crystal is such that the effective indices of refraction of the liquid crystal and polymer are matched, incident light is transmitted through the material. On the other hand, when the alignment of the liquid crystal is such that the effective indices of refraction of the liquid crystal along the cell axis (perpendicular to the substrates) and polymer differ significantly, incident light is scattered.

In the "birefringent" mode, the index of refraction of the polymer and the index of refraction of the liquid crystal along the cell axis match. The liquid crystal film thickness and the orientation of the liquid crystal in the microdroplets are selected to rotate the polarization direction of the incident beam by a substantial angle as the light traverses through the cell. The orientation of the polarizer on the one side of the cell and the analyzer on the other side are adjusted to give the minimum transmission in one of the two orientations of the liquid crystal. The other orientation, then, corresponds to maximum transmission.

In both modes, the boundary conditions and the electrical properties of the liquid crystal can be selected to form a monostable, bistable or multistable device. Applications of such devices includes high resolution display devices, optical computing, optical data storage and optical communications.

One object of the invention is the formation of improved light modulating materials comprising microdomains of ferroelectric liquid crystals dispersed in a polymer medium. Still other features and advantages and a full understanding of the invention will become apparent to those skilled in the art from the following description of the best modes and the accompanying drawing.

### Brief Description of the Drawings

Figures **1A** and **1B** are schematic cross-sectional views showing one embodiment of the material in an as-formed (or, in the case of monostable materials, a field-OFF condition) and a field-ON condition, respectively;
Figure 2A is a schematic cross-sectional views of a second embodiment of the material in an as-formed (or, in the case of a monostable material, field-OFF) condition; and
Figures 2B and 2C are schematic cross-sectional views of the embodiment of Figure 2A in different field-ON conditions. While polarizers are shown in Figure 2C for purposes of consistency with figures 2A and 2B, they are unnecessary to the operation of a display making use of the condition shown in Figure 2C.

### Detailed Description of the Preferred Embodiment

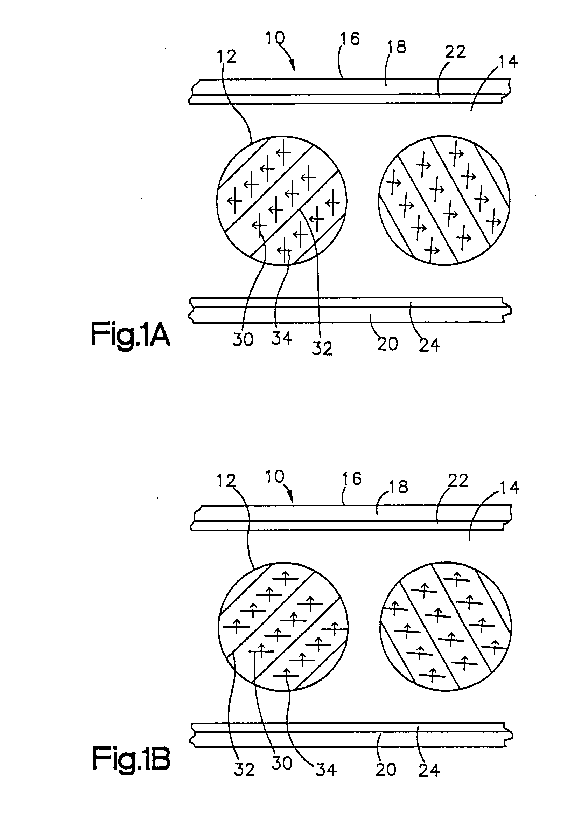

Figures **1A-2C** illustrate various embodiments of a light modulating material comprising microdomains of ferroelectric smectic liquid crystal formed in a medium of light transmissive polymer by phase separation from solution with the polymer or a prepolymer. For example, Figures **1A** and **1B** illustrate a shutter or display **10** comprising a light modulating material in which droplets **12** of the liquid crystal form in a polymer medium **14** during phase separation in a magnetic field normal to a viewing surface 16 of the material. The device **10** includes, in addition to the light modulating material, transparent substrates **18, 20** (preferably of glass) having transparent electrodes **22, 24** (preferably of indium-tin-oxide) deposited on inner surfaces of the substrates facing the polymer medium **14.**

As shown schematically in Figure **1A,** solidifying the medium **14** in a magnetic field perpendicular to the viewing surface **16** forces the liquid crystal molecules **30** in the microdomains **12** to align parallel to the magnetic field. The smectic planes **32** and the electrical dipoles **34** of the liquid crystal **12** align randomly from microdomain to microdomain. If the liquid crystal and polymer are selected such that an index of refraction of the polymer is approximately equal to the index of refraction of the liquid crystal parallel to the long molecular axis, the device **10** in an as-formed state is optically homogeneous and transmissive along a direction perpendicular to the viewing surface **16**. The scattering of incident light incident along a direction oblique to the viewing surface **16** of the device **10** (*i*.*e*., haze) can be reduced if the medium **14** is birefringent and the ordinary and extraordinary indices of refraction of the polymer are approximately equal to the indices of refraction of the liquid crystal parallel and perpendicular to the long molecular axis.

For liquid crystalline materials with positive dielectric anisotropy, a relatively weak DC voltage difference generated between the transparent electrodes **22** and **24** realigns the electrical dipoles **34** perpendicular to the viewing surface **16**. As shown schematically in Figure **1B**, the molecular long axes of the molecules **30** in the microdomains **12** are now randomly aligned from microdomain to microdomain. The effective indices of refraction of the microdomains **12** along the direction perpendicular to the viewing direction **16** are no longer approximately equal to the effective index of refraction of the polymer medium **14**. This mismatch of the indices of refraction gives rise to a strong Rayleigh scattering of incident light. The optical contrast between the light transmissive as-formed state and the light scattering state enables the device to modulate light.

If the liquid crystal and polymer are selected such that the liquid crystal phase in the microdomains **12** strongly anchors at the surfaces of the microdomains, the liquid crystal will return spontaneously to the light transmissive as-formed state shown in Figure **1A** when the voltage difference across the transparent electrodes **22, 24** is removed. By this means, a monostable "normally transmitting" (or "reverse mode") device is formed. Depending on the materials used, the switching time for this devices may be at least approximately two orders of magnitude less than the typical switching times of comparable devices using polymer dispersed nematic liquid crystal.

A different selection of liquid crystal and polymer such that the liquid crystal in the microdomains **12** weakly anchor at the surfaces of the microdomains results in a device which will remain in the scattering state shown in Figure **1B** even after the voltage difference between the electrodes **22, 24** is removed. A high frequency AC field or, in the case of liquid crystal materials with low polarization density, a relatively high DC field across the electrodes **22, 24** realigns the molecules **30** back to the as-light transmissive as-formed state shown in Figure **1A**. (The strength of a DC field effective to realign the molecules **30** back to the state shown in Figure **1A** is determined by the relative strengths of the permanent and induced dipole moments.) By this means, a bistable device is formed. As with the normally transmissive device, the switching time for this devices may be at least approximately two orders of magnitude less than the switching times of typical polymer dispersed nematic liquid crystal devices. Neither the normally transmissive device nor the bistable device illustrated in Figures **1A** and **1B** require polarizers to modulate light.

For liquid crystalline materials with negative dielectric anisotropy, a DC voltage difference generated between the transparent electrodes **22** and **24** realigns the electrical dipoles **34** perpendicular to the viewing surface **16**. As in the case of liquid crystals with positive dielectric anisotropy, the effective indices of refraction of the microdomains **12** along the direction perpendicular to the viewing direction **16** are then no longer approximately equal to the effective index of refraction of the medium 14, giving rise to scattering. Whether the device is monostable or bistable depends on whether the liquid crystal and polymer are such that the anchoring of the liquid crystal at the surfaces of the microdomains **12** is strong or weak.

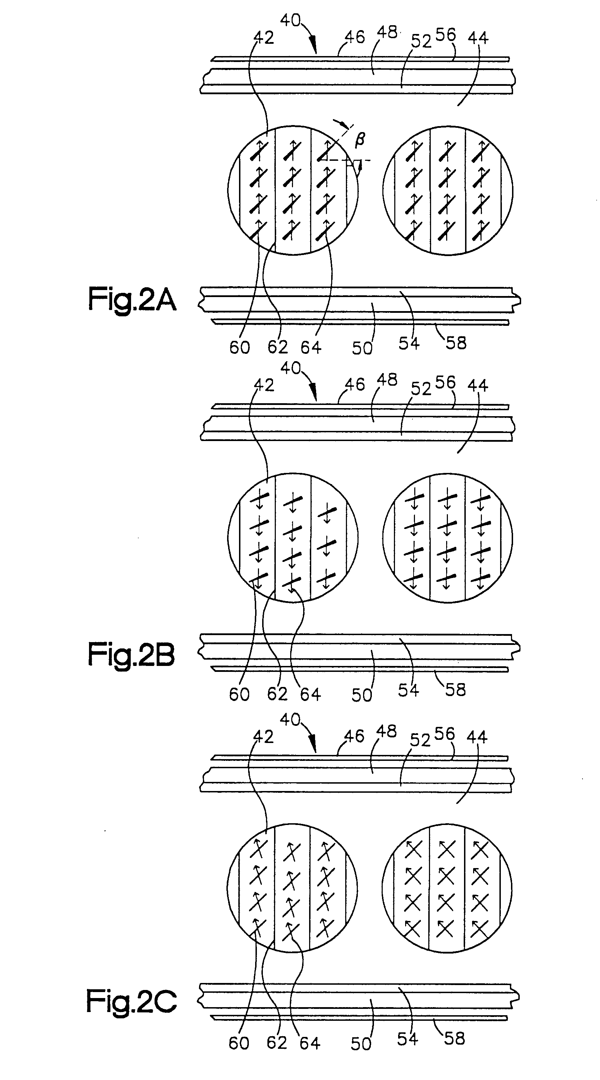

Figures **2A**, **2B** and **2C** illustrate shutters or displays **40** comprising a light modulating material in which droplets 42 of the liquid crystal form in a polymer medium **44** during phase separation due to the influence of external fields (as discussed below). The device **40** includes, in addition to the light modulating material, transparent substrates **48, 50** having transparent electrodes **52, 54** deposited on inner surfaces of the substrates facing the polymer medium **44** and polarizers **56, 58** adjacent to opposite surfaces of the substrates. The polarizers **56, 58** can be rotated to have their axes parallel of perpendicular to each other, depending on requirements.

As shown schematically in Figure **2A**, solidifying the medium **44** in a magnetic field approximately parallel to the viewing surface **46** and a DC or slowly varying AC voltage perpendicular to the viewing surface **46** forces the molecule **60** in the microdomains **42** to align in "bookshelf" geometry such that the smectic planes **62** are perpendicular to the viewing surface **46**. The electric dipoles **64** of the droplets **42** align perpendicularly to the viewing surface **46**, while the molecules **60** themselves align at a tilt angle β with respect to a line perpendicular to the smectic planes **62**. (The molecules **64** are tilted out of the plane represented by the paper, as shown by the larger end of the "molecules" shown in Figure **2A**). If the liquid crystal and polymer are selected such that an index of refraction of the polymer is approximately equal to the effective index of refraction of the liquid crystal along the cell axis when its molecules are aligned at a tilt angle β, the light modulating material in an as-formed state transmits incident light and rotates the polarization direction of the incident light along a direction perpendicular to the viewing surface **46**.

If, in addition, the liquid crystal and polymer are selected such that the liquid crystal phase in the microdomains **42** weakly anchors at the surfaces of the microdomains, applying a DC field in a direction opposite to that in which the medium **44** was solidified causes the molecules **60** to switch within the smectic layers so that the dipole moments **64** point in the opposite direction. In this alignment, shown schematically in Figure **2B**, the light modulating material also transmits and rotates the direction of polarization of the incident light along a direction normal to the viewing surface **46**. The rotation of the polarization direction is opposite to that of the as-formed state. The liquid crystal may be returned to the alignment of Figure **2A** by again applying a DC field in the direction of the field in which the medium **44** solidified.

By rotating the polarization directions of the polarizers **56, 58,** it is possible to maximize light transmission through the device **40** in one of the alignments shown in Figures **2A, 2B** and minimize light transmission through the device in the other alignment. By this means, a "birefringence" mode device is formed. The relative orientations of the polarizers for obtaining maximum contrast is dependent on factors including the birefringence of the smectic phase, the thickness of the light modulating material, and the tilt angle of the liquid crystal. Advantages of such birefringence mode devices include ultra-high speed bistable switching and high contrast. One disadvantage is low light throughput due to the use of polarizers.

Alternatively, if the liquid crystal and polymer are selected such that the liquid crystal has positive dielectric anisotropy and the liquid crystal phase in the microdomains **42** strongly anchors at the surfaces of the microdomains, generating a strong DC voltage across the electrodes **52, 54** induces a realignment of the liquid crystal molecules toward a direction nearly perpendicular to the viewing surface **46**. The degree of realignment is dependent on the interaction energy of the permanent dipole, the magnitude of which is dependent on the first power of the electric field strength, and of the induced dipole, the magnitude of which is dependent on the second power of the electric field strength. In this realigned state, shown schematically in Figure **2C**, the effective indices of refraction of the microdomains **42** along the direction perpendicular to the viewing direction **46** are no longer approximately equal to the effective index of refraction of the medium **44**. This mismatch of the indices of refraction gives rise to a strong Rayleigh scattering of incident light. When the strong DC field is removed, the liquid crystal spontaneously returns to the alignment shown in Figure **2A**. By this means a scattering-transmissive device may be formed.

While polarizers **56, 58** are shown in Figure **2C** for purposes of consistency.with Figures **2A** and **2B**, the light scattering occurs in the state shown in Figure **2C** even when unpolarized light is incident on the medium **44**. In fact, the contrast and the light throughput between the light transmitting state of Figure **2A** and the light scattering state of Figure **2C** would increase if the polarizers were removed. While a scattering-transmissive device constructed using the material shown in Figures **2A** and **2C** having polarizers such as those shown at **56, 58** would be operative, such a device would preferably have no polarizers.

Devices operating in scattering-transmissive or bistable modes similar to those illustrated in Figures **1A** and **1B** may also be formed by solidifying the medium **14** in the presence of an DC or AC electric field. Alternatively, devices operating in the scattering -transmissive or birefringence modes discussed in connection with Figures **2A**, **2B** and **2C** may be formed by shearing the light modulating material while keeping the liquid crystal in either a smectic A or smectic C phase by heating, or by solidifying the medium **44** in the presence of a temperature gradient parallel to the viewing surface **46**. Depending on the materials, the circumstances in which the polymer is solidified and manner of aligning the liquid crystal, the microdomains may be non-spherical (*e.g.* take the form of spheroids rather than spheres.) This difference in shape is expected to impact on the switching behavior of the material and can be exploited to improve the operation of the device.

All of the above discussion, although framed in terms of a device utilizing smectic C* liquid crystal, is applicable also to devices using smectic F*, I*, G* and H* phases. Since these phases are capable of more than two stable orientation when aligned in bookshelf geometry, it is anticipated that devices using these materials will be capable of multistable switching in a preferred configuration.

The alignment may be performed when the solution of liquid crystal is first formed and solidified. Alternatively, the alignment may be performed by heating a material already containing dispersed microdomains of ferroelectric smectic liquid crystal and then resolidifying the medium in the presence of an induced force to promote the alignment of the liquid crystal.

The preferred embodiment of the invention is further exemplified by the following non-limiting example:

The ferroelectric material ZLI-3234, available from E. Merck of Darmstadt, Germany, was dissolved with polymethylmethacrylate ["PMMA"] in chloroform in the following proportions:

| | |
|---|---|
| ZLI-3234 | 0.42 g |
| PMMA | 0.28 g |
| CHCl₃ | 6.3 g |

The solution was put in a glass tube and mixed with an agitator for ten minutes. Spacers of 5 *µ*m diameter were added to this mixture to provide uniform cell spacing. The solution was coated on one indium-tin-oxide ["ITO"] coated glass plate with a barrier layer of SiO₂. The glass plate was left overnight to allow the solvent to evaporate, leaving a thin layer comprising droplets of liquid crystal dispersed in transparent polymer. The second plate was put on top of the coated one and the two were clamped together. The cell was heated to 150°C, put under a pressure of 20 psi in a hot press, and then cooled at a rate of ∼1°C/min to 30°C.

The SiO₂ was removed from small areas of the glass plates outside the cells and wire leads were soldered to the ITO surface with indium metal. An electrical signal comprising alternating positive and negative square pulses of variable period and amplitude was applied and the switching characteristics of the cell observed under a polarizing microscope.

The observations were made while changing the amplitude of the electrical pulses having amplitudes from 0 volts to 25 volts, and pulse durations from 10 Hz to 100 Hz. Almost 80% of the microdroplets formed according to the procedure set forth in the last two paragraphs were found to respond to the electrical pulses. Nearly 10-20% of the droplets were identified to be switching bistably. The threshold voltage for various droplets varied from 5 volts to 25 volts, demonstrating the possibility of grey scale in such devices. The bistability of the ON and OFF states was confirmed by removing the leads from the source of the electrical signal and shorting the leads to remove any charge left over on the cell plates. Shorting the leads did not affect the state of the droplets identified to be bistable as they remained in the state in which they were when the leads were disconnected. A large fraction of other droplets were found to change their optical appearance but did not appear to switch when the electrical pulses were applied, because their optical axes were in the wrong orientation (for the experimental set-up) to exhibit bistability.

The bistable droplets appeared to switch at a frequency of at least 100 Hz. It is believed that the actual switching time was much shorter (∼ 100 *µ*s) as specified by the manufacturer of the liquid crystal for bulk samples, but the experiment was not designed to test switching at such high speeds.

## Claims

1. A light modulating material defining a viewing surface, comprising microdomains of a liquid crystal dispersed in a light transmissive polymer medium, **characterised in that** the liquid crystal is ferroelectric and smectic, and wherein an index of refraction of the polymer medium is approximately equal to an effective index of refraction along an angle complementary to the tilt angle of the liquid crystal.

2. A light modulating material according to claim 1 wherein the microdomains are spheroidal.

3. A light modulating material according to claim 1 wherein the microdomains are spherical.

4. A light modulating material according to claim 1, 2 or 3, wherein the liquid crystal is dispersed as droplets in said polymer medium and weakly anchored at the boundaries of the droplets so as to promote multistable switching of the liquid crystal.

5. A light modulating material according to claim 4 wherein the liquid crystal is weakly anchored at the boundaries of the droplets so as to promote bistable switching of the liquid crystal.

6. A light modulating material according to any preceding claim wherein the polymer medium is composed of an optically isotropic polymer.

7. A light modulating material according to claim 1 wherein the liquid crystal is a smectic C* phase crystal.

8. A light modulating device including a light modulating material comprising microdomains of a liquid crystal dispersed in a light transmissive polymer medium, said material being positioned between two polarizers and between electrodes constructed and arranged to impose electric fields across the material in a direction parallel to its thinnest dimension, **characterised in that** the light modulating device is a bistable light modulating device, the liquid crystal is ferroelectric and smectic, an index of refraction of the polymer medium is approximately equal to an effective index of refraction along an angle complementary to the tilt angle of the liquid crystal, and the means are electrodes and two polarizers, said material being positioned between the two polarizers and between the electrodes.

9. A light modulating material defining a viewing surface, comprising microdomains of a liquid crystal dispersed in a light transmissive polymer medium, **characterised in that** the liquid crystal is ferroelectric and smectic, and wherein the microdomains have a characteristic length no greater than ten times the pitch length of the ferroelectric smectic liquid crystal, and the ferroelectric liquid crystal molecules throughout each of said domains are aligned generally parallel to each other in smectic planes which are themselves parallel to each other.

10. A light modulating material according to claim 9 wherein the alignment of liquid crystal directors within layers is not twisted from layer to layer.

11. A method for forming a light modulating material characterised by the steps of:
a) forming a solution having a mesogenic component capable of forming a ferroelectric smectic liquid crystal and a medium-forming component capable of forming a light transmissive polymer medium;
b) inducing a force in the solution to promote alignment of molecules of the mesogenic component along a direction relative to a surface of the solution; and
c) solidifying the medium forming component while the solution is biased to promote phase separation of microdomains of the ferroelectric smectic liquid crystal from the polymeric medium wherein the microdomains are sized to the order of magnitude of the pitch length of the ferroelectric material or less.

12. The method of claim 11 wherein the step of inducing a force includes imposing an electromagnetic field having a electric field component perpendicular to the surface of the solution.

13. The method of claim 11 or claim 12 wherein the step of inducing a force includes imposing an electromagnetic field having a magnetic field component parallel to the surface of the solution.

14. The method of claim 13 wherein the step of inducing a force includes imposing an electromagnetic field having a magnetic field component parallel to the surface of the solution and a DC electric field component perpendicular to the surface; and wherein the method includes the additional steps of positioning optical polarizers adjacent the material and adjusting the polarization directions of the polarizers to maximize or minimize light transmission.

15. A method according to claim 11 wherein the step of inducing a force in the solution is performed by imposing a thermal gradient along a direction parallel to the surface of the solution while the medium-forming component is being solidified.

16. A method according to any of claims 11 to 15 wherein the step of inducing a force in the solution is performed by imposing an electromagnetic field in the solution while the medium-forming component is being solidified.

17. A method for forming a light modulating material characterised by the steps of:
a) forming a solution having a mesogenic component capable of forming a dispersed ferroelectric smectic liquid crystal and a medium-forming component capable of forming a light transmissive polymer medium;
b) solidifying the medium forming component to promote phase separation of droplets of the ferroelectric smectic liquid crystal from the polymeric medium, wherein an index of refraction of the polymeric medium is approximately equal to the effective index of refraction along an angle complementary to the tilt angle of the liquid crystal; and
c) shearing the material to promote elongation of the droplets of the ferroelectric smectic liquid crystal.

18. A method according to claim 17 wherein the mesogenic material is selected to have positive dielectric anisotropy.

19. A method according to claim 17 or claim 18 wherein the step of shearing the material is performed while heating the material to a temperature in which the liquid crystal is in a smectic A or smectic C phase so that the liquid crystal is aligned in parallel smectic planes regardless of an electric field applied thereto.

## Patentansprüche

1. Licht-modulierendes Material, das eine Betrachtungsfläche definiert, umfassend Mikrodomänen eines in einem lichtdurchlässigen Polymermedium dispergierten Flüssigkristalls, **dadurch gekennzeichnet**, dass der Flüssigkristall ferroelektrisch und smektisch ist und wobei der Brechungsindex des Polymermediums in etwa dem effektiven Brechungsindex entlang eines Komplementärwinkels zu dem Neigungswinkel des Flüssigkristalls entspricht.

2. Licht-modulierendes Material nach Anspruch 1, wobei die Mikrodomänen spheroidal sind.

3. Licht-modulierendes Material nach Anspruch 1, wobei die Mikrodomänen spherisch sind.

4. Licht-modulierendes Material nach Anspruch 1, 2 oder 3, wobei der Flüssigkristall als Tröpfchen in dem Polymermedium dispergiert ist und nur schwach an den Grenzflächen der Tröpfchen verankert ist, um so ein multistabiles Schalten des Flüssigkristalls zu unterstützen.

5. Licht-modulierendes Material nach Anspruch 4, wobei der Flüssigkristall nur schwach an den Grenzflächen der Tröpfchen verankert ist, um so ein bistabiles Schalten des Flüssigkristalls zu unterstützen.

6. Licht-modulierendes Material nach mindestens einem der vorhergehenden Ansprüche, wobei das Polymermedium aus einem optisch isotropen Polymer aufgebaut ist.

7. Licht-modulierendes Material nach Anspruch 1, wobei der Flüssigkristall ein smektischer C*-Phasen-Kristall ist.

8. Licht-modulierende Vorrichtung einschliesslich eines Licht-modulierenden Materials, umfassend Mikrodomänen aus einem in einem lichtdurchlässigen Polymermedium dispergierten Flüssigkristall, wobei das Material zwischen zwei Polarisatoren und zwischen Elektroden positioniert ist, die so gebaut und angeordnet sind, dass elektrische Felder über das Material in paralleler Richtung zu dessen dünnster Abmessung angelegt werden, **dadurch gekennzeichnet**, dass die Licht-modulierende Vorrichtung eine bistabile Licht-modulierende Vorrichtung ist, der Flüssigkristall ferroelektrisch und smektisch ist, der Brechungsindex des Polymermediums in etwa dem effektiven Brechungsindex entlang eines Komplementärwinkels zu dem Neigungswinkel des Flüssigkristalls entspricht und die Einrichtungen Elektroden und zwei Polarisatoren sind, wobei das Material zwischen den zwei Polarisatoren und zwischen den Elektroden positioniert ist.

9. Licht-modulierendes Material, das eine Betrachtungsfläche definiert, umfassend Mikrodomänen eines in einem lichtdurchlässigen Polymermedium dispergierten Flüssigkristalls, **dadurch gekennzeichnet**, dass der Flüssigkristall ferrolektrisch und smektisch ist und wobei die Mikrodomänen eine charakteristische Länge von nicht grösser als dem Zehnfachen der Ganghöhe bzw. Segmentlänge des ferroelektrischen smektischen Flüssigkristalls haben und die ferroelektrischen Flüssigkristallmoleküle in jeder der Domänen allgemein parallel zueinander in smektischen Ebenen ausgerichtet sind, welche selbst parallel zueinander verlaufen.

10. Licht-modulierendes Material nach Anspruch 9, wobei die Ausrichtung der Flüssigkristall-Ausrichter innerhalb der Schichten nicht von Schicht zu Schicht verdreht ist.

11. Verfahren zur Bildung eines Licht-modulierenden Materials, **gekennzeichnet durch** die Schritte:
(a) Bilden einer Lösung mit einer mesogenen Komponente, die zur Bildung eines ferroelektrischen smektischen Flüssigkristalls in der Lage ist, und einer Medium bildenden Komponente, die zur Bildung eines lichtdurchlässigen Polymermediums in der Lage ist;
(b) Induzieren einer Kraft in der Lösung, um die Ausrichtung von Molekülen der mesogenen Komponente entlang einer Richtung in Bezug zu der Oberfläche der Lösung zu unterstützen; und
(c) Verfestigen der Medium bildenden Komponente, während die Lösung dazu neigt, die Phasentrennung von Mikrodomänen des ferroelektrischen, smektischen Flüssigkristalls von dem polymeren Medium zu unterstützen, wobei die Mikrodomänen im Grössenbereich der Ganghöhe des ferroelektrischen Materials oder weniger bemessen sind.

12. Verfahren nach Anspruch 11, wobei der Schritt des Induzierens einer Kraft das Anlegen eines elektromagnetischen Feldes mit einer elektrischen Feldkomponente senkrecht zu der Oberfläche der Lösung einschliesst.

13. Verfahren nach Anspruch 11 oder Anspruch 12, wobei der Schritt des Induzierens einer Kraft das Anlegen eines elektromagnetischen Feldes mit einer magnetischen Feldkomponente parallel zu der Oberfläche der Lösung einschliesst.

14. Verfahren nach Anspruch 13, wobei der Schritt des Induzierens einer Kraft das Anlegen eines elektromagnetischen Feldes mit einer magnetischen Feldkomponente parallel zu der Oberfläche der Lösung und einer elektrischen Gleichstrom-Feldkomponente senkrecht zu der Oberfläche einschliesst; und
wobei das Verfahren die weiteren Schritte des Positionierens optischer Polarisatoren nahe dem Material und das Einstellen der Polarisierungsrichtungen der Polarisatoren einschliesst, um die Lichtdurchlässigkeit zu minimieren oder zu maximieren.

15. Verfahren nach Anspruch 11, wobei der Schritt des Induzierens einer Kraft in der Lösung durch Anlegen eines thermischen Gradienten entlang der Richtung parallel zu der Oberfläche der Lösung erfolgt, während die Medium bildende Komponente verfestigt wird.

16. Verfahren nach mindestens einem der Ansprüche 11 bis 15, wobei der Schritt des Induzierens einer Kraft in der Lösung durch Anlegen eines elektromagnetischen Feldes in der Lösung durchgeführt wird, während die Medium bildende Komponente verfestigt wird.

17. Verfahren zur Bildung eines Licht-modulierenden Materials, **gekennzeichnet durch** die Schritte:
(a) Bilden einer Lösung mit einer mesogenen Komponente, die zur Bildung eines dispergierten, ferroelektrischen, smektischen Flüssigkristalls in der Lage ist, und einer Medium bildenden Komponente, die zur Bildung eines lichtdurchlässigen Polymermediums in der Lage ist;
(b) Verfestigen der Medium bildenden Komponente, um die Phasentrennung von Tröpfchen des ferroelektrischen, smektischen Flüssigkristalls von dem polymeren Medium zu unterstützen, wobei der Brechungsindex des polymeren Mediums in etwa dem effektiven Brechungsindex entlang eines Komplementärwinkels zu dem Neigungswinkel des Flüssigkristalls entspricht; und
(c) Scheren des Materials, um die Verlängerung der Tröpfchen des ferroelektrischen, smektischen Flüssigkristalls zu unterstützen.

18. Verfahren nach Anspruch 17, wobei das mesogene Material so gewählt ist, dass es eine positive dielektrische Anisotropie aufweist.

19. Verfahren nach Anspruch 17 oder Anspruch 18, wobei der Schritt des Scherens des Materials durchgeführt wird unter gleichzeitiger Erwärmung des Materials auf eine Temperatur, bei welcher der Flüssigkristall eine smektische A- oder smektische C-Phase ist, so dass der Flüssigkristall in parallelen smektischen Ebenen ausgerichtet ist, unabhängig von einem daran angelegten elektrischen Feld.

## Revendications

1. Matériau de modulation de lumière définissant une surface d'observation, comprenant des microdomaines d'un cristal liquide dispersé dans un milieu polymère translucide, **caractérisé en ce que** le cristal liquide est ferroélectrique et smectique, et dans lequel un indice de réfraction du milieu polymère est approximativement égal à un indice de réfraction effectif suivant un angle complémentaire de l'angle d'inclinaison du cristal liquide.

2. Matériau de modulation de lumière selon la revendication 1, dans lequel les microdomaines sont sphéroïdaux.

3. Matériau de modulation de lumière selon la revendication 1, dans lequel les microdomaines sont sphériques.

4. Matériau de modulation de lumière selon la revendication 1, 2 ou 3, dans lequel le cristal liquide est dispersé sous forme de gouttelettes dans ledit milieu polymère et est faiblement accroché au niveau des limites des gouttelettes afin de favoriser une commutation multistable du cristal liquide.

5. Matériau de modulation de lumière selon la revendication 4, dans lequel le cristal liquide est faiblement accroché au niveau des limites des gouttelettes afin de favoriser une commutation bistable du cristal liquide.

6. Matériau de modulation de lumière selon l'une quelconque des revendications précédentes, dans lequel le milieu polymère est composé d'un polymère à isotropie optique.

7. Matériau de modulation de lumière selon la revendication 1, dans lequel le cristal liquide est un cristal en phase smectique C*.

8. Dispositif de modulation de lumière comprenant un matériau de modulation lumineuse comportant des microdomaines d'un cristal liquide dispersé dans un milieu polymère translucide, ledit matériau étant disposé entre deux polariseurs et entre des électrodes construites et agencées pour appliquer des champs électriques au matériau dans une direction parallèle à sa plus faible épaisseur, **caractérisé en ce que** le dispositif de modulation de lumière est un dispositif de modulation de lumière bistable, le cristal liquide est ferroélectrique et smectique, un indice de réfraction du milieu polymère est approximativement égal à un indice de réfraction effectif suivant un angle complémentaire de l'angle d'inclinaison du cristal liquide, et les moyens sont des électrodes et deux polariseurs, ledit matériau étant disposé entre les deux polariseurs et entre les électrodes.

9. Matériau de modulation de lumière définissant une surface d'observation, comprenant des microdomaines d'un cristal liquide dispersé dans un milieu polymère translucide, **caractérisé en ce que** le cristal liquide est ferroélectrique et smectique, et dans lequel les microdomaines ont une longueur caractéristique non supérieure à dix fois la longueur d'écartement du cristal liquide ferroélectrique smectique, et les molécules de cristal liquide ferroélectrique dans la totalité de chacun desdits domaines sont alignées d'une manière globalement parallèle les unes aux autres dans des plans smectiques eux-mêmes mutuellement parallèles.

10. Matériau de modulation de lumière selon la revendication 9, dans lequel l'alignement d'orienteurs de cristaux liquide dans des couches ne se déforme pas d'une couche à l'autre.

11. Procédé pour former un matériau de modulation de lumière, caractérisé par les étapes consistant à :
a) former une solution ayant un constituant mésogène apte à former un cristal liquide ferroélectrique smectique et un constituant de formation de milieu apte à former un milieu polymère translucide ;
b) induire une force dans la solution pour favoriser l'alignement de molécules du constituant mésogène dans une direction par rapport à une surface de la solution ; et
c) solidifier le constituant de formation de milieu tandis que la solution est polarisée pour favoriser la séparation, à partir du milieu polymère, de phases de microdomaines du cristal liquide ferroélectrique smectique, les dimensions des microdomaines étant de l'ordre de grandeur de la longueur d'écartement du matériau ferroélectrique ou plus petites.

12. Procédé selon la revendication 11, dans lequel l'étape consistant à induire une force comporte l'application d'un champ électromagnétique ayant une composante de champ électrique perpendiculaire à la surface de la solution.

13. Procédé selon la revendication 11 ou la revendication 12, dans lequel l'étape consistant à induire une force comporte l'application d'un champ électromagnétique ayant une composante de champ électrique parallèle à la surface de la solution.

14. Procédé selon la revendication 13, dans lequel l'étape consistant à induire une force comporte l'application d'un champ électromagnétique ayant une composante de champ électrique parallèle à la surface de la solution et une composante de champ électrique de courant continu perpendiculaire à la surface ; et
dans lequel le procédé comprend les étapes supplémentaires consistant à placer des polariseurs optiques au voisinage immédiat du matériau et à régler les directions de polarisation des polariseurs pour obtenir une transmission maximale ou minimale de lumière.

15. Procédé selon la revendication 11, dans lequel l'étape consistant à induire une force dans la solution est effectuée en appliquant un gradient thermique dans une direction parallèle à la surface de la solution pendant la solidification du constituant de formation de milieu.

16. Procédé selon l'une quelconque des revendications 11 à 15, dans lequel l'étape consistant à induire une force dans la solution est effectuée en appliquant un champ électromagnétique dans la solution pendant la solidification du constituant de formation de milieu.

17. Procédé pour former un matériau de modulation de lumière, caractérisé par les étapes consistant à :
a) former une solution ayant un constituant mésogène apte à former un cristal liquide ferroélectrique smectique dispersé et un constituant de formation de milieu apte à former un milieu polymère translucide ;
b) solidifier le constituant de formation de milieu pour favoriser la séparation de phases, à partir du milieu polymère, de gouttelettes du cristal liquide ferroélectrique smectique, un indice de réfraction du milieu polymère étant approximativement égal à l'indice de réfraction effectif suivant un angle complémentaire de l'angle d'inclinaison du cristal liquide ; et
c) cisailler le matériau pour favoriser l'allongement des gouttelettes du cristal liquide ferroélectrique smectique.

18. Procédé selon la revendication 17, dans lequel le matériau mésogène est choisi pour avoir une anisotropie diélectrique positive.

19. Procédé selon la revendication 17 ou la revendication 18, dans lequel l'étape consistant à cisailler le matériau est effectuée tout en chauffant le matériau à une température dans laquelle le cristal liquide est dans une phase smectique A ou smectique C, de sorte que le cristal liquide est aligné en plans smectiques parallèles indépendamment du champ électrique qui lui est appliqué.
